# DEMANDE DE BREVET EUROPEEN

(11) **EP 3 628 890 A1**
(43) Date de publication de la demande: **01.04.2020**
(21) Numéro de dépôt: 19197954.1
(22) Date de dépôt: 18.09.2019
(51) Int. Cl.: F16H 19/06, F16H 25/20

(54) **TRANSMISSION HYBRIDE A RAIDEUR AUGMENTEE POUR VERIN A CABLE**

(30) Priorité: 25.09.2018 FR 1858696
(71) Demandeur: Commissariat à l'Energie Atomique et aux Energies Alternatives, 75015 Paris (FR)
(72) Inventeur: GARREC, Philippe, 91190 GIF-SUR-YVETTE (FR)
(74) Mandataire: Prouvez, Julien

(57) **Abrégé**

Actionneur (1) comprenant :
- une unité de motorisation (2) pour mettre en mouvement un élément mené (5);
-un premier élément de transmission (10) comprenant une extrémité (12) solidaire d'une première poulie (31);
- un deuxième élément de transmission (20) comprenant une extrémité (22) fonctionnellement reliée à la première poulie (31) ;
le deuxième élément de transmission (20) étant agencé de manière à ce que le rapport (K₁₀/K₂₀) entre la raideur (K₁₀) du premier élément de transmission (10) et la raideur (K₂₀) du deuxième élément de transmission (20) soit compris entre 1 et 2.8.

## Description

### DOMAINE DE L'INVENTION

L'invention concerne le domaine des actionneurs et plus particulièrement le domaine des actionneurs comprenant un élément de transmission réalisant une boucle continue ou non.

### ARRIERE PLAN DE L'INVENTION

Il est connu des actionneurs comprenant une unité de motorisation pour mettre en mouvement une vis et un écrou coopérant avec la vis pour être déplacé le long de la vis sous l'effet de la rotation de la vis. Un tel actionneur comprend également une boucle de câble comprenant un premier brin de câble comprenant une première extrémité solidaire de l'écrou et une deuxième extrémité solidaire d'une première poulie. Ce premier brin de câble est généralement appelé branche courte de l'actionneur. La boucle de câble comprend également un deuxième brin de câble comprenant une première extrémité solidaire de l'écrou et une deuxième extrémité fonctionnellement reliée à la première poulie, le deuxième câble coopérant avec une deuxième poulie. Ce deuxième brin de câble est généralement appelé branche longue de l'actionneur. La première poulie est classiquement reliée à un élément que l'on souhaite actionner en rotation.

Dans le but d'améliorer la linéarité de la loi de raideur de l'actionneur, on réalise fréquemment une précharge de chaque branche de la boucle de câble. Cette précharge doit être réglée périodiquement. Au cours des opérations de réglage de la précharge, les paliers des première et deuxième poulies subissent des efforts importants qui impactent lourdement leur dimensionnement

Faute d'une maintenance régulière de la précharge, les actionneurs existants sont très faiblement préchargés et ont des performances faibles en termes de rigidité articulaire, de linéarité et/ou de puissance transmise. Alternativement, pour pouvoir supporter des précharges importantes, les paliers des actionneurs sont surdimensionnés et deviennent alors coûteux, volumineux et pesants, ce qui pose des problèmes d'intégration dans les mécanismes dans lesquels de tels actionneurs sont utilisés comme les exosquelettes.

### OBJET DE L'INVENTION

L'invention a pour objet d'améliorer la compacité et le poids d'un actionneur à câble préchargé.

### RESUME DE L'INVENTION

A cet effet, on prévoit un actionneur comprenant une unité de motorisation pour mettre en mouvement un élément menant, un élément mené coopérant avec l'élément menant pour être déplacé sous l'effet du mouvement de l'élément mené, un premier élément de transmission comprenant une première extrémité solidaire de l'élément mené et une deuxième extrémité solidaire d'une première poulie. L'actionneur comprend également un deuxième élément de transmission comprenant une première extrémité solidaire de l'élément mené et une deuxième extrémité fonctionnellement reliée à la première poulie, le deuxième élément de transmission coopérant avec une deuxième poulie. Selon l'invention, le deuxième élément de transmission est agencé de manière à ce que le rapport entre la raideur du premier élément de transmission et la raideur du deuxième élément de transmission soit compris entre 1 et 2.8.

L'inventeur a découvert qu'une diminution notable des efforts repris par les paliers lors des opérations de précharge est atteinte lorsque le rapport entre la raideur du premier élément de transmission et la raideur du deuxième élément de transmission est compris entre 1 et 2.8, permettant alors un ajustement significatif du dimensionnement des paliers. Cet ajustement permet d'obtenir un actionneur compact et économique. L'inventeur a remarqué que l'effet sur la compacité et les coûts de fabrication de l'actionneur était encore plus marqué lorsque le rapport entre la raideur du premier élément de transmission et la raideur du deuxième élément de transmission est compris entre 1 et 2.

La raideur K d'un élément de transmission correspond au rapport entre la force F appliquée sur cet élément de transmission et la déformation x que cette force engendre sur ledit élément de transmission (K=F/x). La raideur d'un brin de câble étant proportionnelle à sa longueur (toutes choses étant égales par ailleurs : matériau, section, etc...), le rapport entre la raideur d'un premier brin de câble et la raideur d'un deuxième brin de câble est égal au rapport entre la longueur du premier brin et la longueur du deuxième brin. Dans le cadre de la présente demande de brevet, les éléments de transmission fonctionnent essentiellement en traction et la déformation, et x correspond à l'allongement longitudinal de l'élément de traction.

La raideur articulaire Kₐ d'une articulation correspond, quant à elle au rapport entre le couple C appliqué sur l'articulation et le déplacement angulaire θ que ce couple engendre sur l'articulation (Kₐ=C/θ).

L'inventeur a découvert que dans le cas d'une articulation actionnée par un vérin à câble, un rapport entre la raideur d'un premier élément de transmission reliant l'élément mené et la poulie d'actionnement et la raideur du deuxième élément de transmission compris entre 1 et 2.8 contribue à améliorer la raideur articulaire de l'articulation tout en préservant la linéarité de la loi de raideur de l'actionneur.

Avantageusement, le premier élément de transmission comprend un premier câble de première section et/ou le deuxième élément de transmission comprend un deuxième câble de deuxième section.

Il est possible d'utiliser des éléments de transmission réalisés dans des matériaux identiques lorsque la deuxième section est supérieure à la première section.

Il est possible de conserver un rayon faible pour la deuxième poulie lorsque le deuxième élément de transmission comprend un troisième et un quatrième élément de transmission s'étendant parallèlement l'un à l'autre. La conception d'un tel actionneur est simplifiée lorsque le troisième et/ou le quatrième élément de transmission comprennent un câble.

Les effets de l'allongement du câble en charge sont réduits lorsque le deuxième élément de transmission comprend un ruban. En effet, une telle disposition permet de réduire la longueur totale de câble dans l'actionneur et l'utilisation d'un ruban métallique ou en composite de carbone permet d'approcher un module de Young apparent jusqu'à quatre fois supérieur à celui d'un câble.

Au sens de la présente demande, un ruban est une bande mince dont l'épaisseur est faible par rapport à sa largeur (dans un rapport minimum de 5). Cette configuration permet notamment d'enrouler le ruban sur une poulie et s'en servir comme d'une courroie.

Avantageusement encore, le deuxième élément de transmission comprend une première portion s'étendant depuis la première extrémité du deuxième élément de transmission jusqu'à la deuxième poulie, la première portion étant reliée à la deuxième poulie, et une deuxième portion reliée d'une part à la première poulie et d'autre part à la deuxième poulie. Il est possible d'amener le rapport entre la raideur du premier élément de transmission et la raideur du deuxième élément de transmission à des valeurs proches de 1 lorsque la première portion et/ou la deuxième portion du deuxième élément de transmission comprend une première bielle. On obtient une bonne compacité d'un tel dispositif lorsque le deuxième élément de transmission comprend une deuxième bielle.

D'autres caractéristiques et avantages de l'invention ressortiront à la lecture de la description qui suit de modes de réalisation particuliers non limitatifs de l'invention.

### BREVE DESCRIPTION DES DESSINS

Il sera fait référence aux figures annexées parmi lesquelles :
- la figure 1 est une vue schématique en coupe d'un actionneur selon un premier mode de réalisation de l'invention ;
- la figure 2 est une vue schématique en coupe d'un actionneur selon un deuxième mode de réalisation de l'invention ;
- la figure 3a est une vue schématique partielle en vue de dessus d'un actionneur selon un troisième mode de réalisation de l'invention ;
- la figure 3b est une vue schématique en coupe d'un actionneur selon le troisième mode de réalisation de l'invention ;
- la figure 4a est une vue schématique en coupe d'un actionneur selon un quatrième mode de réalisation de l'invention ;
- la figure 4b est une vue schématique en perspective de l'actionneur selon le quatrième mode de réalisation de l'invention ;
- la figure 5 est une vue schématique en coupe d'un actionneur selon un cinquième mode de réalisation de l'invention ;
- la figure 6 est une vue schématique en perspective de l'actionneur selon le cinquième mode de réalisation de l'invention ;
- la figure 7 est une vue schématique en coupe d'un actionneur selon un sixième mode de réalisation de l'invention ;
- la figure 8 est une vue schématique en coupe d'un actionneur selon un septième mode de réalisation de l'invention.

### DESCRIPTION DETAILLEE DE L'INVENTION

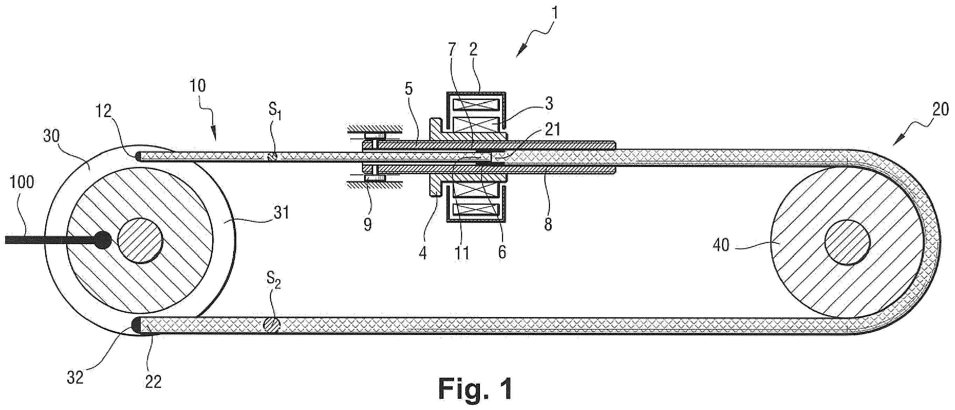

En référence à la figure 1, l'actionneur selon l'invention, généralement désigné 1, comprend un moteur annulaire 2 dont le rotor 3 est solidaire d'un écrou 4 à recirculation de billes. L'actionneur 1 comprend également une vis 5 tubulaire coopérant avec l'écrou 4 pour être déplacée sous l'effet d'une rotation du rotor 3 du moteur annulaire 2. Un premier élément de transmission, ici un premier brin de câble 10 comprend une première extrémité 11 reliée par une première sertissure 6 à une portion médiane 7 d'un alésage intérieur 8 de la vis 5. La deuxième extrémité 12 du premier brin de câble 10 est quant à elle sertie sur la périphérie 30 d'une première poulie 31. Le premier brin de câble 10 est en acier et possède une première section continue S₁. La première poulie 31 est solidaire en rotation d'un élément à actionner 100, ici un segment de jambe d'un exosquelette non représenté.

Un deuxième élément de transmission, ici un deuxième brin de câble 20 comprend une première extrémité 21 reliée par la première sertissure 6 à la portion médiane 7 de l'alésage intérieur 8 de la vis 5 et une deuxième extrémité 22 reliée par une deuxième sertissure 32 sur la première poulie 31, le deuxième brin de câble 20 s'enroule sur un secteur de 180 degrés sur une deuxième poulie 40. Le deuxième brin de câble 20 est en acier et possède une deuxième section continue S₂. La deuxième section S2 du deuxième brin de câble 20 est égale à 13mm² et est supérieure à la première section S₁ du premier brin de câble 10 qui est égale à 5mm². La première section S1 et la deuxième section S2 ont été choisies en tenant notamment compte de la distance séparant la première poulie 31 et la deuxième poulie 40, de manière à ce que le rapport K₁₀/K₂₀ entre la raideur K₁₀ du premier brin de câble 10 et la raideur K₂₀ du deuxième brin de câble 20 soit aussi proche que possible de 1. Ici le rapport est sensiblement égal à 1.15.

En fonctionnement, lors d'une rotation du moteur annulaire 2, l'écrou 4 est entrainé en rotation et déplace alors la vis 5 selon une direction parallèle à l'axe longitudinal de la vis 5. La rotation de la vis 5 est bloquée à l'aide d'un chariot 9 guidé dans des rainures non représentées. La translation de la vis 5 est communiquée via première la sertissure 6 au premier brin de câble 10 et au deuxième brin de câble 20 qui transmettent alors l'effort du moteur annulaire 2 à la première poulie 31, et à l'élément à actionner 100.

Les éléments identiques ou analogues à ceux précédemment décrits porteront une référence numérique identique dans la description qui suit des deuxième, troisième, quatrième, cinquième, sixième et septième modes de réalisation de l'invention.

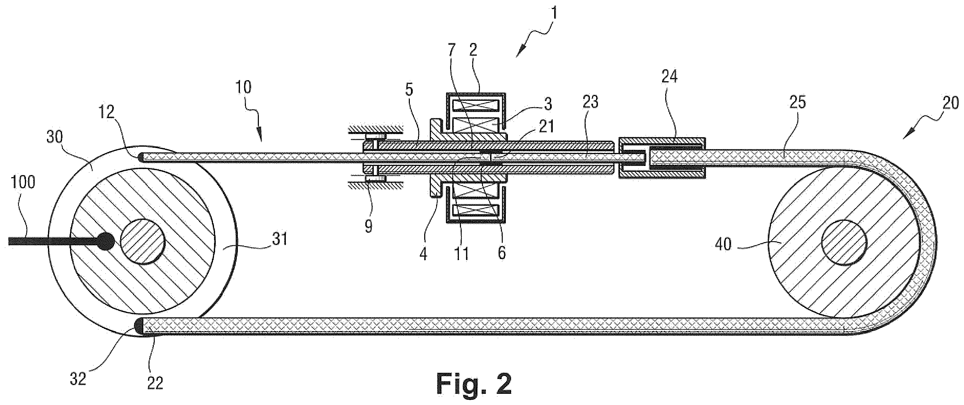

Selon un deuxième mode de réalisation représenté en figure 2, le deuxième brin de câble 20 comprend une première portion 23 de deuxième brin de câble 20 qui s'étend entre la sertissure 6 et un manchon de raccord 24. Le deuxième brin de câble 20 comprend également une deuxième portion 25 de deuxième brin de câble 20 qui s'étend depuis le manchon de raccordement 24 jusqu'à la deuxième sertissure 32. Le manchon de raccordement 24 permet de raccorder la première portion de brin de câble 23 dont la section est idéalement égale à la première section S₁ avec la deuxième portion 25 de deuxième brin de câble 20 dont la section est égale à la deuxième section S₂. Ainsi, il n'est pas nécessaire de modifier l'alésage intérieur 8 de la vis 5 pour mettre en oeuvre le premier brin de câble 10 et le deuxième brin de câble 20 selon l'invention.

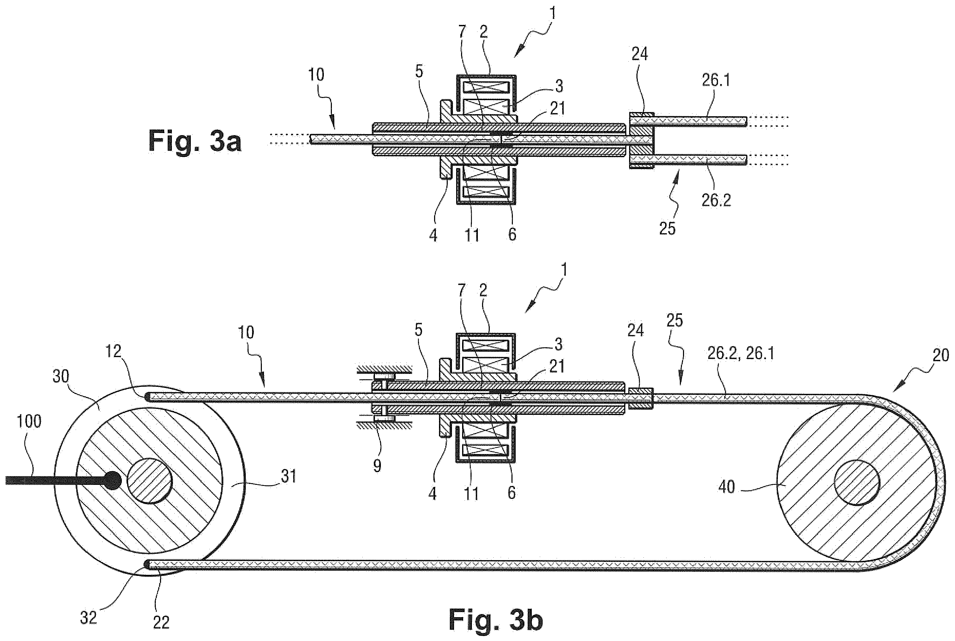

Selon un troisième mode de réalisation représenté en figure 3a et 3b, la deuxième portion 25 de deuxième brin de câble 20 comprend un troisième brin de câble 26.1 et un quatrième brin de câble 26.2 s'étendant parallèlement l'un à l'autre. Le troisième brin de câble 26.1 et le quatrième brin de câble 26.2 s'étendent entre le manchon de raccordement 24 et la deuxième sertissure 32. Les sections du troisième brin de câble 26.1 et du quatrième brin de câble 26.2 sont généralement identiques et sont choisies de manière à ce que le rapport K₁₀/K₂₀ entre la raideur K₁₀ du premier élément de transmission 10 et la raideur K₂₀ du deuxième élément de transmission 20 soit compris entre 1 et 2.8.

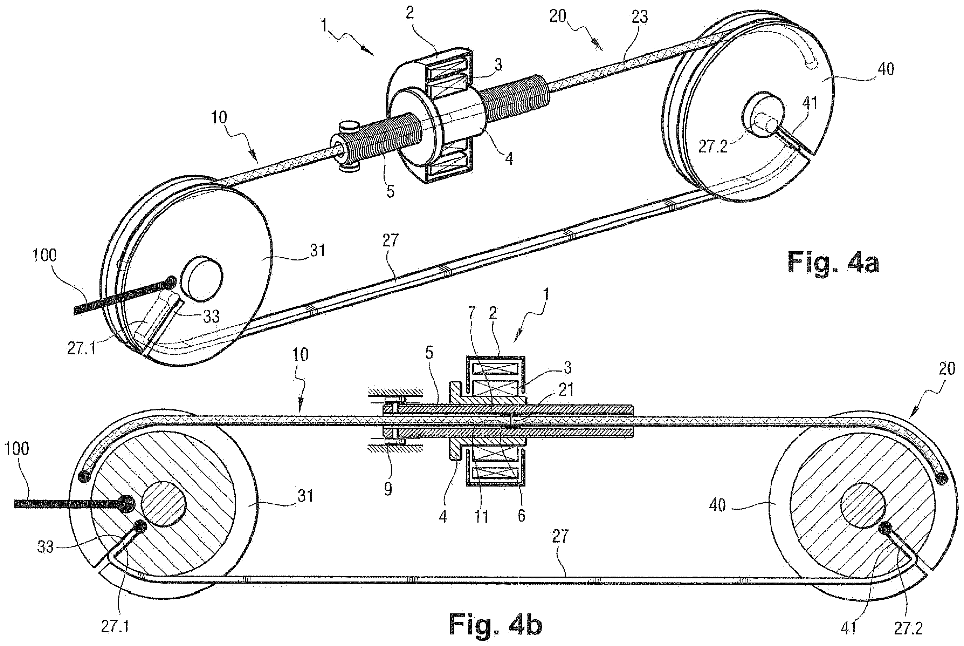

Selon un quatrième mode de réalisation représenté en figure 4a et 4b, le deuxième élément de transmission 20 comprend une première portion 23 de deuxième élément de transmission 20 sous la forme d'un brin de câble 23 s'étendant entre la sertissure 6 et la deuxième poulie 40 et une deuxième portion sous la forme d'un ruban 27 en composite à base de carbone dont une première extrémité 27.1 est engagée et bloquée dans une première fente radiale 33 de la première poulie 31. Une seconde extrémité 27.2 du ruban 27 est engagée et bloquée dans une deuxième fente radiale 41 de la deuxième poulie 40. La section et le matériau du ruban 27 sont choisis de manière à ce que le rapport K₁₀/K₂₀ entre la raideur K₁₀ du premier brin de câble 10 et la raideur K₂₀ du deuxième élément de transmission 20 soit compris entre 1 et 2.8.

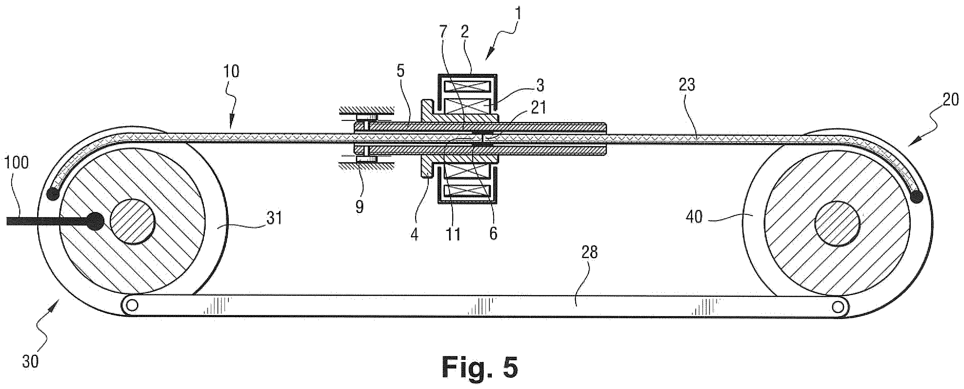

Selon un cinquième mode de réalisation représenté en figure 5, le deuxième élément de transmission 20 comprend une première portion de deuxième élément de transmission 20 sous la forme d'un brin de câble 23 s'étendant entre la sertissure 6 et la deuxième poulie 40. Le deuxième élément de transmission 20 comprend également une deuxième portion sous la forme d'une première bielle 28 en acier articulée d'une part à la première poulie 31 et d'autre part à la deuxième poulie 40. La mise en oeuvre d'une bielle 28 permet d'augmenter de manière très importante la raideur du deuxième élément de transmission 20 et d'obtenir un rapport K₁₀/K₂₀ entre la raideur K₁₀ du premier élément de transmission 10 et la raideur K₂₀ du deuxième élément de transmission 20 proche de 1.

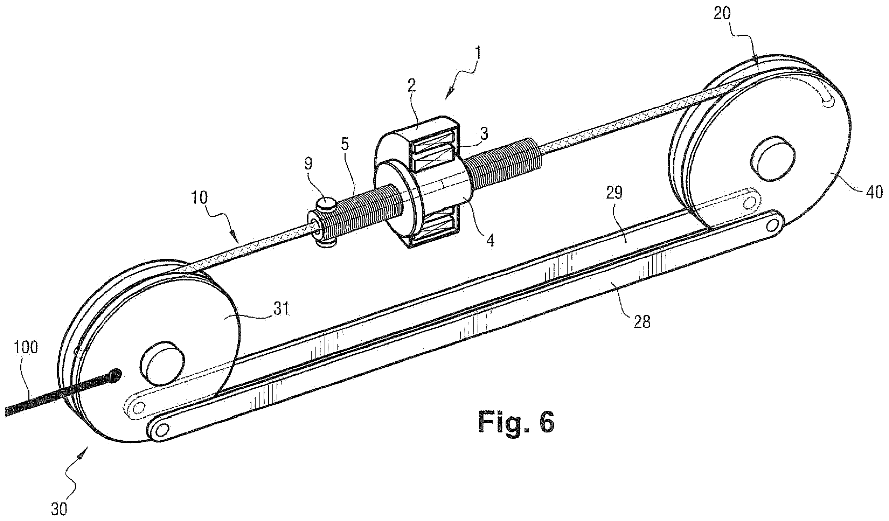

Selon un sixième mode de réalisation de l'invention représenté en figure 6, le deuxième élément de transmission 20 comprend une deuxième bielle 29 identique à la première bielle 28 et s'étendant parallèlement à celle-ci.

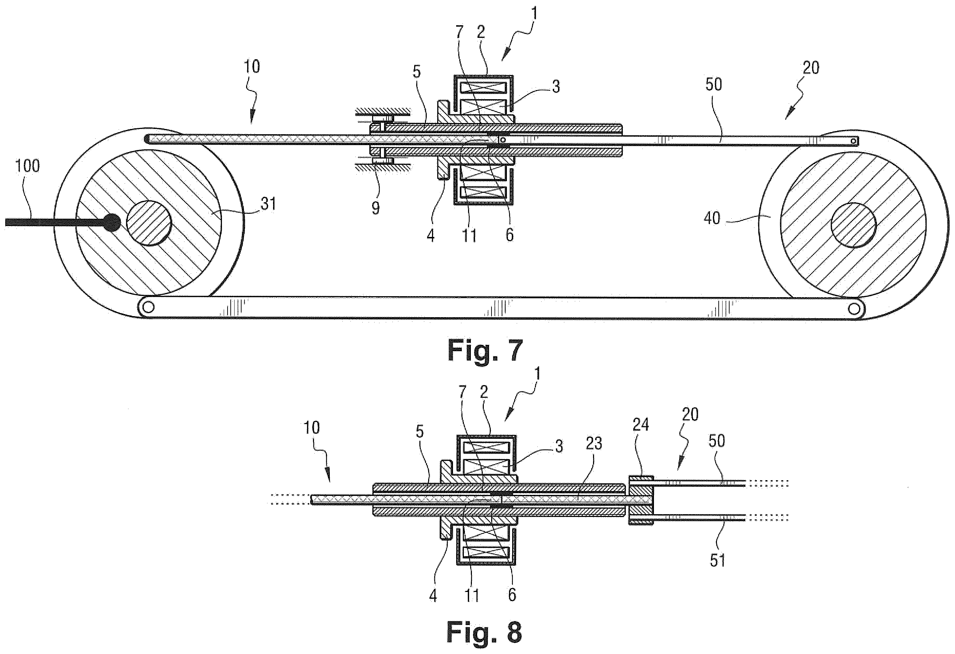

Selon un septième mode de réalisation de l'invention représenté en figure 7, la première portion du deuxième élément de transmission 20 comprend une troisième bielle 50 en acier. Le premier élément de transmission 10 peut également comprendre une bielle métallique ou composite s'étendant entre l'élément mené 6 et la première poulie 31.

Selon un huitième mode de réalisation de l'invention représenté en figure 8, la première portion du deuxième élément de transmission 20 comprend un deuxième brin de câble 23 s'étendant entre la sertissure 6 et le manchon de raccordement 24. La troisième bielle 50 s'étendant alors entre le manchon de raccordement 24 et la deuxième poulie 40. Une quatrième bielle 51, identique à la troisième bielle 50, s'étend parallèlement à cette dernière entre le manchon de raccordement 24 et la deuxième poulie 40.

Bien entendu, l'invention n'est pas limitée aux modes de réalisation décrits mais englobe toute variante entrant dans le champ de l'invention telle que définie par les revendications.

En particulier,
- bien qu'ici l'élément mené soit une vis tubulaire et l'élément menant soit un écrou, l'invention s'applique également à d'autres types de cinématique d'entrainement comme par exemple une vis motorisée coopérant avec un écrou mené, ou encore une crémaillère coopérant avec un pignon motorisé ;
- bien qu'ici l'élément mené comprenne un chariot pour en bloquer la rotation relativement à l'élément menant, l'invention s'applique également à d'autres types de moyens d'anti-rotation comme par exemple un doigt coopérant avec une rainure, ou d'autres moyens faisant appel aux éléments de transmission ;
- bien qu'ici l'écrou soit entrainé en rotation par un moteur annulaire, l'invention s'applique également d'autres types d'unité de motorisation comme par exemple un moteur linéaire, un moteur pneumatique ou hydraulique, un moteur électrique conventionnel ;
- bien qu'ici le premier élément de transmission et le deuxième élément de transmission comprennent chacun une extrémité sertie sur la vis tubulaire, l'invention s'applique également à d'autres moyens de solidariser les extrémités des éléments de transmission à l'élément menant comme par exemple une soudure, un collage, un serrecâble ou un oeillet ;
- bien qu'ici les brins de câbles soient en acier, l'invention s'applique également à d'autres types d'éléments de transmission comme par exemple des chaines, des câbles synthétiques ou réalisés en d'autres matériaux ;
- bien qu'ici le deuxième brin de câble s'enroule sur un secteur de 180 degrés sur la deuxième poulie, l'invention s'applique également à d'autres modes de coopération du deuxième élément de transmission avec la deuxième poulie, comme par exemple un secteur d'enroulement supérieur ou inférieur à 180 degrés, un sertissage de l'extrémité du deuxième brin de câble ou une jonction par oeillet boulonné ;
- bien qu'ici, la première et la deuxième portion du deuxième élément de transmission soient reliées par manchon de raccordement, l'invention s'applique également à d'autres moyens de raccordement de la première et la deuxième portion du deuxième élément de transmission comme par exemple une sertissure, un surmoulage, un noeud, une soudure, une brasure ou un collage ;
- bien qu'ici la deuxième portion du deuxième élément de transmission comprenne une bielle en acier, l'invention s'applique également à un deuxième élément de transmission dont la première portion comprend une bielle, ou encore à d'autres types de bielle comme par exemple une bielle en matériau composite à base de carbone ou kevlar ;
- bien qu'ici le rotor soit solidaire d'un écrou à bille, l'invention s'applique également à d'autres types d'élément mené, comme par exemple un écrou à rouleaux ou à filet.

## Revendications

1. Actionneur (1) comprenant :
- une unité de motorisation (2) pour mettre en mouvement un élément menant (4);
- un élément mené (5) coopérant avec l'élément menant (4) pour être déplacé sous l'effet du mouvement de l'élément mené (5) ;
- un premier élément de transmission (10) comprenant une première extrémité (11) solidaire de l'élément mené (5) et une deuxième extrémité (12) solidaire d'une première poulie (31) ;
- un deuxième élément de transmission (20) comprenant une première extrémité (21) solidaire de l'élément mené (5) et une deuxième extrémité (22) fonctionnellement reliée à la première poulie (31), le deuxième élément de transmission (20) coopérant avec une deuxième poulie (40),
le deuxième élément de transmission (20) étant agencé de manière à ce que le rapport (K₁₀/K₂₀) entre la raideur (K₁₀) du premier élément de transmission (10) et la raideur (K₂₀) du deuxième élément de transmission (20) soit compris entre 1 et 2.8.

2. Actionneur (1) selon la revendication 1, dans lequel le rapport (K₁₀/K₂₀) entre la raideur (K₁₀) du premier élément de transmission (10) et la raideur du deuxième élément de transmission (20) est compris entre 1 et 2.

3. Actionneur (1) selon l'une des revendications 1 ou 2, dans lequel le premier élément de transmission (10) comprend un premier câble de première section (S₁).

4. Actionneur (1) selon l'une quelconque des revendications précédentes, dans lequel le deuxième élément de transmission (20) comprend un deuxième câble de deuxième section (S₂).

5. Actionneur (1) selon les revendications 3 et 4, dans lequel la deuxième section (S₂) est supérieure à la première section (S₁).

6. Actionneur (1) selon l'une quelconque des revendications précédentes, dans lequel le deuxième élément de transmission (20) comprend un troisième élément de transmission (26.1) et un quatrième élément de transmission (26.2) s'étendant parallèlement l'un à l'autre.

7. Actionneur (1) selon la revendication 6, dans lequel le troisième élément de transmission (26.1) et/ou le quatrième élément de transmission (26.2) comprennent un câble.

8. Actionneur (1) selon l'une quelconque des revendications précédentes, dans lequel le deuxième élément de transmission (20) comprend un ruban(27).

9. Actionneur (1) selon l'une quelconque des revendications précédentes, dans lequel le deuxième élément de transmission (20) comprend une première portion (23) s'étendant depuis la première extrémité (21) du deuxième élément de transmission (20) jusqu'à la deuxième poulie (40), la première portion (23) étant reliée à la deuxième poulie (40), et une deuxième portion (25) reliée d'une part à la première poulie (31) et d'autre part à la deuxième poulie (40).

10. Actionneur (1) selon la revendication 9, dans lequel la première portion (23) et/ou la deuxième portion (25) du deuxième élément de transmission (20) comprend une première bielle (28).

11. Actionneur (1) selon l'une quelconque des revendications précédentes, dans lequel le deuxième élément de transmission (20) comprend une deuxième bielle (29) .
